# EUROPEAN PATENT APPLICATION

(11) **EP 4 491 944 A1**
(43) Date of publication of application: **15.01.2025**
(21) Application number: 23766654.0
(22) Date of filing: 01.03.2023
(51) Int. Cl.: F21Y 105/10, F21Y 115/10, F21S 41/255, F21S 41/663, F21S 41/675, F21W 102/13

(54) **VEHICLE LIGHT**

(30) Priority: 07.03.2022 JP 2022034093
(71) Applicant: KOITO MANUFACTURING CO., LTD., Minato-ku, Tokyo, 108-8711 (JP)
(72) Inventor: OHNO, Tomoyuki, Shizuoka-shi, Shizuoka 424-8764 (JP)
(74) Representative: Zimmermann, Tankred Klaus
(86) International application number: PCT/JP2023/007492
(87) International publication number: WO 2023/171477

(57) **Abstract**

Provided is a vehicle lamp capable of illuminating a desired region with a desired brightness without a complicated optical system even when a light source includes one multi-divided LED array. The vehicle lamp includes a light source (multi-divided LED array) (3) configured such that a large number of light emitting elements (micro LEDs (31)) are arranged, the light source (3) selecting a light emitting element to emit light of a desired pattern, a main optical system (2) that projects the light emitted from the light source to form a main light distribution pattern, and an auxiliary optical system (4) that causes the light which has been emitted from the light source (3) and does not directly enter the main optical system (2) to enter the main optical system (2). The light incident from the auxiliary optical system (4) (downward reflecting mirror (41)) to the main optical system (2) forms an auxiliary light distribution pattern in an external region adjacent to the main light distribution pattern.

## Description

### TECHNICAL FIELD

The present invention relates to a vehicle lamp, and particularly to a vehicle lamp suitable for use in a headlight of an automobile.

### BACKGROUND ART

For a headlight (headlamp) of a vehicle such as an automobile, adaptive driving beam (ADB) light distribution control has been proposed as a technique for controlling light distribution. The ADB light distribution control is a technique of controlling light distribution so as not to dazzle other vehicles such as oncoming vehicles and preceding vehicles and pedestrians, which are detected from, e.g., an image captured by a camera. As one of the headlamps that perform the ADB light distribution control, a headlamp using a multi-divided light emitting element (multi-divided LED array) in which µm-order micro LEDs are arranged in a matrix as a light source has been proposed.

For example, Patent Literature 1 proposes a technique of using a multi-divided LED array as a light source and projecting light emitted from the multi-divided LED array by an optical system to form a light distribution pattern. In this technique, selective light emission control is performed on micro LEDs of the multi-divided LED array so that the ADB light distribution control for forming a desired light distribution pattern can be performed.

### CITATION LIST

### PATENT LITERATURE

Patent Literature 1: JP-A-2021-068513

### SUMMARY OF INVENTION

### PROBLEMS TO BE SOLVED BY INVENTION

In a case where illumination is performed by one multi-divided LED array, when an illumination region is expanded by increasing a projection magnification by the optical system, the brightness (illuminance) of the illumination region decreases. In order to set the illumination region to a desired brightness, it is sufficient to reduce the projection magnification by the optical system. However, in this case, there is a trade-off that the illumination region is narrowed and an illumination region having a desired size cannot be ensured.

In Patent Literature 1, illumination by the plurality of multi-divided LED arrays is combined to illuminate a desired region with a desired brightness, but a cost is increased by the number of multi-divided LED arrays, and a composite projection lens for projecting each of the plurality of multi-divided LED arrays is required as an optical system. On this point, the cost is also increased.

An object of the present invention is to provide a vehicle lamp capable of illuminating a desired region with a desired brightness without a complicated optical system even when a light source includes one multi-divided LED array.

### SOLUTION TO PROBLEMS

The present invention is a vehicle lamp including a light source configured such that a large number of light emitting elements are arranged, the light source selecting a light emitting element to emit light of a desired pattern, a main optical system that projects the light emitted from the light source to form a main light distribution pattern, and an auxiliary optical system that causes light which has been emitted from the light source and does not directly enter the main optical system to enter the main optical system, in which the light incident from the auxiliary optical system forms an auxiliary light distribution pattern in an external region adjacent to the main light distribution pattern.

In the present invention, for example, the auxiliary optical system is a reflecting mirror that reflects the light which has been emitted from the light source and does not directly enter the main optical system and causes the light to enter the main optical system. In this case, the reflecting mirror is disposed below the lens optical axis of the main optical system, and when the reflected light enters the main optical system, an upper auxiliary light distribution pattern is formed in an external region above the main light distribution pattern. The reflecting mirror is disposed at the side of the lens optical axis of the main optical system, and when the reflected light enters the main optical system, a right auxiliary light distribution pattern or a left auxiliary light distribution pattern is formed in an external region on the right or left side of the main light distribution pattern.

In the present invention, the vehicle lamp may further include a drive mechanism that moves the reflecting mirror. The drive mechanism moves the reflecting mirror to a position at which the light from the light source enters the main optical system or a position at which the light from the light source does not enter the main optical system. In the present invention, for example, the light source includes a multi-divided LED array in which a large number of micro LEDs are arranged. Further, the vehicle lamp includes a controller that selectively controls light emission from the large number of micro LEDs according to a vehicle surrounding situation. The controller preferably controls a tilting mechanism.

### EFFECTS OF INVENTION

According to the present invention, the main light distribution pattern is limited to a region having a required size, so that a desired brightness of the main light distribution pattern can be ensured. On the other hand, the auxiliary light distribution pattern is formed adjacent to the main light distribution pattern by light which does not contribute to formation of the main light distribution pattern, so that the main light distribution pattern and the auxiliary light distribution pattern can be combined and a region wider than a required region can be illuminated.

### BRIEF DESCRIPTION OF DRAWINGS

Fig. 1 is a perspective view of an automobile according to a first embodiment;
Fig. 2 is a perspective view of a main portion of a main lamp unit of the first embodiment;
Fig. 3 is a horizontal sectional view of the main lamp unit of the first embodiment;
Fig. 4 is a block configuration diagram of a control system of a multi-divided LED array;
Fig. 5 is a schematic view of a main light distribution pattern and a light distribution pattern in ADB control;
Fig. 6 is a schematic view of the main light distribution pattern combined with an upper auxiliary light distribution pattern;
Fig. 7 is a perspective view of a main portion of a main lamp unit of a second embodiment;
Fig. 8 is a horizontal sectional view of the main lamp unit of the second embodiment;
Fig. 9 is a schematic view of a main light distribution pattern combined with right and left auxiliary light distribution patterns;
Fig. 10 is a perspective view of the main portion of the main lamp unit of the second embodiment;
Fig. 11 is a horizontal sectional view of the main lamp unit of the second embodiment;
Fig. 12 is an enlarged perspective view of the main portion;
Fig. 13 is a schematic view for describing operation of a reflecting mirror; and
Fig. 14 is a schematic view of a main light distribution pattern combined with upper, right, and left auxiliary light distribution patterns.

### DESCRIPTION OF EMBODIMENTS

### (First Embodiment)

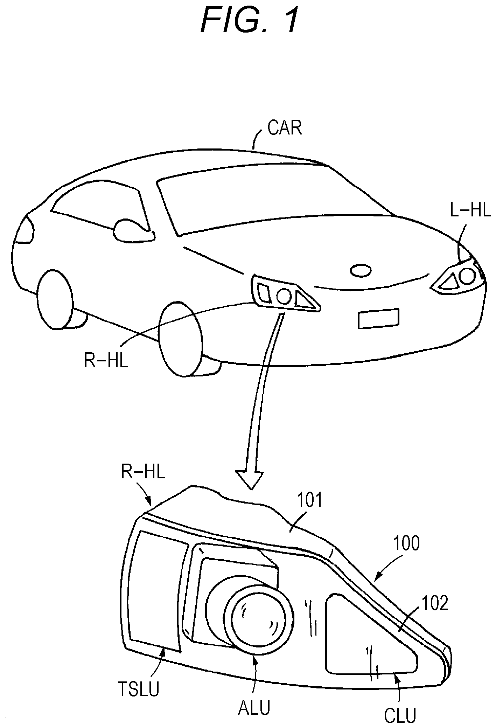

An embodiment of the present invention will be described with reference to the drawings. Fig. 1 is a perspective view of a first embodiment in which the present invention is applied to a headlamp of an automobile, and right and left headlamps R-HL, L-HL are each attached to right and left front portions of a vehicle body of an automobile CAR. Each of the headlamps R-HL, L-HL includes an ADB lamp unit (hereinafter, ADB unit) ALU capable of performing ADB light distribution control, a clearance lamp unit (hereinafter, clearance unit) CLU, and a turn signal lamp unit (hereinafter, turn unit) TSLU, which are integrally arranged in a lamp housing 100. Note that hereinafter, the right-left direction is based on the right-left direction of the automobile.

The right and left headlamps R-HL, L-HL are configured to be bilaterally symmetrical, and Fig. 1 shows an enlarged view in which part of the right headlamp R-HL is cut away. The lamp housing 100 includes a lamp body 101 opened forward of the automobile and a translucent cover 102 attached to the opening, and the ADB unit ALU, the clearance unit CLU, and the turn unit TSLU are arranged in the lamp housing 100 as described above. In a region where these lamp units are not arranged, a so-called extension is disposed such that the inside of the housing is not exposed.

As will be described in detail later, a light source 3, a main optical system 2, and an auxiliary optical system 4 are incorporated into a unit case 1 of the ADB unit ALU, and the ADB unit ALU is fixed to and supported by the lamp body 101. Since the present invention relates to the ADB unit ALU, the detailed description of the clearance unit CLU and the turn unit TSLU will be omitted, but both these units have a configuration in which an LED is used as a light source and white light and amber light emitted from the LED are emitted through an inner lens made of translucent resin and are further emitted to the outside through the translucent cover 102.

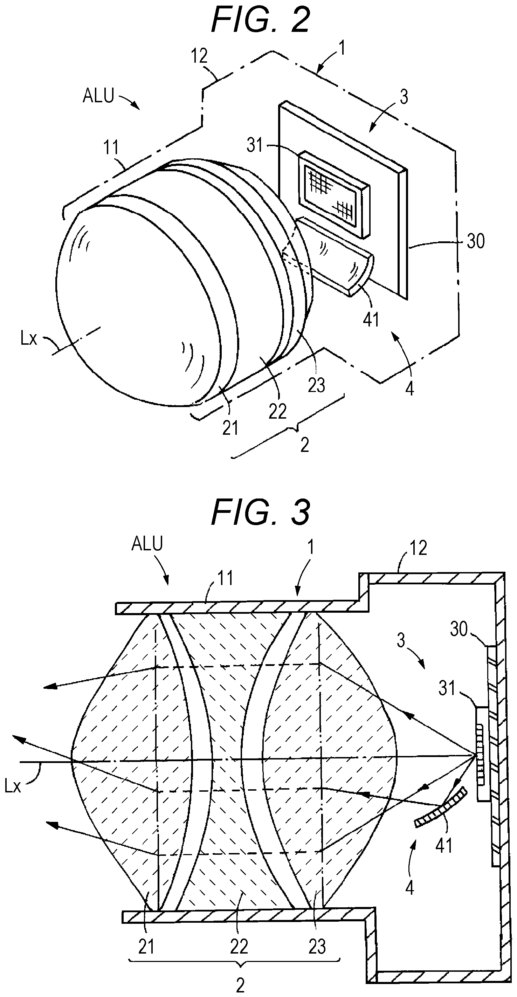

Fig. 2 is an enlarged perspective view of the ADB unit ALU, and the unit case 1 is indicated by a chain line to show the configuration of a main portion of the ADB unit ALU. Fig. 3 is a longitudinal sectional view of the ADB unit ALU. As shown in these drawings, the unit case 1 includes a lens holder 11 partially having a tubular shape and a light source box 12 integrated with the lens holder 11. A projection lens 2 forming the main optical system is housed in the lens holder 11, and a multi-divided LED array 3 as a light source and the auxiliary optical system 4 are arranged in the light source box 12.

The projection lens 2 includes a triplet lens having a three-lens configuration of a convex lens 21, a concave lens 22, and a convex lens 23 having positive, negative, and positive refractive powers, and at least one lens surface of each lens is an aspherical surface. With this configuration, aberration in the projection lens 2 is suppressed, and when light from the multi-divided LED array 3 is projected through the projection lens 2, a high-resolution high-definition ADB light distribution pattern can be obtained.

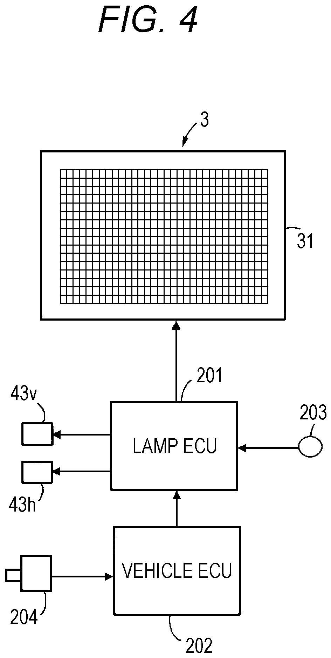

As shown in a block configuration diagram of the multi-divided LED array and a control system thereof in Fig. 4, the multi-divided LED array 3 as the light source has a configuration in which hundreds to thousands of µm-order micro LEDs 31 having substantially square light emitting surfaces are planarly arranged in a matrix with the light emitting surfaces facing the same direction. The multi-divided LED array 3 is connected to a lamp electronic control unit (ECU) 201, and the lamp ECU 201 selectively controls the micro LEDs 31 to emit light and stop light emission. Each micro LED 31 emits white light when controlled to emit light, and the directional angle (angle at which a light intensity is halved) thereof is approximately ±30° with respect to the center axis of the light emitting surface. Thus, the directional angle of the entire multi-divided LED array 3 in which the plurality of micro LEDs 31 is arranged is also set to the same angle.

As shown in Figs. 2 and 3, the multi-divided LED array 3 is mounted on a light source substrate 30, and at a position near the focal point of the projection lens 2, an array light emitting surface (surface obtained by connecting the light emitting surfaces of the plurality of micro LEDs 31) is disposed substantially perpendicular to a lens optical axis Lx of the projection lens 2. In addition, in this embodiment, the upper-lower and right-left positions of the multi-divided LED array 3 are set such that the lens optical axis Lx is located slightly shifted upward with respect to the intermediate position of the array light emitting surface in the upper-lower direction at the intermediate position of the array light emitting surface in the right-left direction. By appropriately setting the aperture dimension of the projection lens 2 and the dimension of the light emitting surface of the multi-divided LED array 3, light within the above-described directional angle out of light emitted from the array light emitting surface of the multi-divided LED array 3 enters the projection lens 2. Note that the ADB control unit 5 may be mounted on the light source substrate 30.

The auxiliary optical system 4 includes a downward reflecting mirror 41 disposed on the lower front side of the array light emitting surface of the multi-divided LED array 3. The downward reflecting mirror 41 is formed of a cylindrical concave mirror having a gentle curvature, and is fixed and supported in the light source box 12 with its reflecting surface facing upward. In addition, the downward reflecting mirror 41 is disposed at a position outside the directional angle of the multi-divided LED array 3, and does not hinder light within the directional angle, which has been emitted from the multi-divided LED array 3, from entering the projection lens 2. On the other hand, the downward reflecting mirror 41 is disposed at a position at which light emitted downward at an angle greater than the directional angle enters. The downward reflecting mirror 41 reflects light, which has been emitted downward from the multi-divided LED array 3 at an angle outside the directional angle, in a somewhat convergent state in the upper-lower direction, and causes the light to enter the projection lens 2. At this time, the downward reflecting mirror 41 is configured to cause the light to enter a region below the optical axis Lx of the projection lens 2 at a required incident angle.

As shown in Fig. 4, a control switch 203 is connected to the lamp ECU 201, and when the control switch 203 is operated, the ADB unit ALU is turned on and off. When the ADB unit ALU is turned on, the ADB light distribution control is executed. The control switch 203 can switch auxiliary light distribution control in the ADB unit ALU to a fixed mode, an automatic mode, or a manual mode, but in the first embodiment, only the fixed mode is available.

The lamp ECU 201 is connected to a vehicle ECU 202, and can perform the ADB light distribution control based on a signal from the vehicle ECU 202. The vehicle ECU 202 outputs an ADB control signal to the lamp ECU 201 based on an image of the periphery of the automobile captured by an in-vehicle camera 204, particularly an image of a front region. Although the details of the vehicle ECU 202 will not be described, the vehicle ECU 202 analyzes the image captured by the in-vehicle camera 204 to detect an object present in front of or on the front lateral side of the automobile, such as other vehicles, a pedestrian, and a sign. In addition, information on the light distribution pattern to be controlled based on the detected object is output as the ADB control signal to the lamp ECU 201. In response to this ADB control signal, the lamp ECU 201 selects the micro LEDs 31 of the multi-divided LED array 3 and emits light. The lamp ECU 201 and the vehicle ECU 202 may have either a hardware configuration or a software configuration.

The left headlamp L-HL shown in Fig. 1 has a configuration bilaterally symmetrical to the right headlamp R-HL described above, but the ADB units ALU, the clearance lamp units CLU, and the turn signal lamp units TSLU forming the right and left headlamps have basically the same configuration except for partially including a bilaterally symmetrical configuration in, e.g., a light distribution direction and a light distribution pattern.

In the ADB unit ALU of the first embodiment, the control switch 203 is set to the fixed mode, and the normal ADB light distribution control is executed. That is, when the control switch 203 is turned on, the lamp ECU 201 causes the micro LEDs 31 of the multi-divided LED array 3 to emit light. As shown in some optical paths of Fig. 3, light emitted from the multi-divided LED array 3 enters the projection lens 2, and is projected in front of the automobile by the projection lens 2. In this manner, a required light distribution pattern is formed.

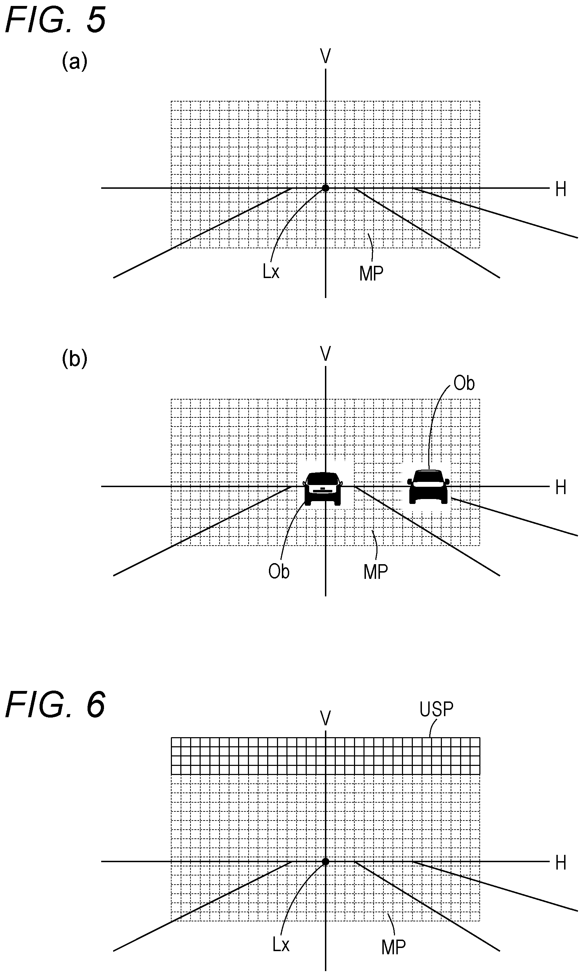

When substantially all the micro LEDs 31 of the multi-divided LED array 3 emit light, a main light distribution pattern MP in which unit illumination cells illuminated by the micro LEDs 31 are combined is formed, as schematically shown in Fig. 5(a). In the figure, V is a vertical line passing through the optical axis Lx of the projection lens 2, and H is a horizontal line. That is, in the light distribution pattern, the unit illumination cells corresponding to the micro LEDs 31 forming the multi-divided LED array 3 are arranged in a matrix. In the main light distribution pattern MP, the projection magnification of the projection lens 2 is set corresponding to the luminous intensity (luminance) of the multi-divided LED array 3 such that each unit illumination cell has a brightness required for light distribution. Thus, the main light distribution pattern MP is a high beam light distribution pattern which illuminates the minimum required region in normal driving, for example, a region including a subject lane and the opposite lane thereof on a road, and the brightness of the illumination region is sufficiently high.

When, e.g., other vehicles present in a region in front of a subject vehicle are detected by the vehicle ECU 202 at the time of illumination with the main light distribution pattern MP, the ADB control signal for preventing dazzlement against the detected other vehicles is output to the lamp ECU 201. Based on the ADB control signal, the lamp ECU 201 turns off the micro LEDs corresponding to the unit illumination cells in which a detected object Ob is present to prevent dazzlement against the object Ob, as schematically shown in Fig. 5(b).

As shown in Fig. 3, light which has been emitted at an angle outside the directional angle and does not enter the projection lens 2 out of light emitted from the multi-divided LED array 3 becomes light which does not contribute to formation of the main light distribution pattern. Of such light, light deviated to below the projection lens 2 enters the downward reflecting mirror 41, is reflected thereon, and enters the projection lens 2. Since this light enters a region below the lens optical axis Lx of the projection lens 2, the light is emitted upward from the projection lens 2 with respect to the lens optical axis Lx. Accordingly, as schematically shown in Fig. 6, this light forms an upper auxiliary light distribution pattern USP in an external region above the main light distribution pattern MP.

The same also applies to the ADB unit ALU of the left headlamp L-HL, and since the upper auxiliary light distribution pattern USP shown in Fig. 6 is formed, a similar light distribution pattern is obtained by combining both light distribution. The formed upper auxiliary light distribution pattern USP is light outside the directional angle of the multi-divided LED array, and therefore, the brightness thereof is somewhat reduced. However, since the light is converged by the downward reflecting mirror 41, the brightness can be increased accordingly. Thus, the main light distribution pattern MP and the upper auxiliary light distribution pattern USP are combined, and the entire illumination region of the main light distribution pattern MP is expanded. As a result, it is possible not only to control the main light distribution pattern MP to have a desired brightness, but also to expand the illumination region by combining the upper auxiliary light distribution pattern USP.

In the first embodiment, at the time of illumination with the main light distribution pattern MP, for example, a road sign disposed at an overhead position on the road can be illuminated by the upper auxiliary light distribution pattern USP. Note that when the main light distribution pattern MP is controlled to a low beam light distribution pattern, light deviated downward with respect to the projection lens 2 is reduced, and for this reason, light entering the downward reflecting mirror 41 is also reduced and it is difficult to form the upper auxiliary light distribution pattern USP. In this case, for example, if light emission from some of the micro LEDs 31 of the multi-divided LED array 3, particularly the micro LEDs illuminating an upper edge region of the main light distribution pattern MP, is continued, the upper auxiliary light distribution pattern USP can be formed by such light emission from the micro LEDs.

As described above, in the first embodiment, the main light distribution pattern MP formed by the main optical system 2 is limited to a region having a required size, so that the main light distribution pattern MP can be controlled to have a desired brightness. On the other hand, the upper auxiliary light distribution pattern USP is formed adjacent to the upper side of the main light distribution pattern MP by light from the light source 3, which does not contribute to formation of the main light distribution pattern MP, so that the main light distribution pattern MP and the upper auxiliary light distribution pattern USP can be combined and a region wider than a required region can be illuminated. In addition, an existing main optical system may be used, and may simply include a reflecting mirror, so that a complicated structure can be avoided.

### (Second Embodiment)

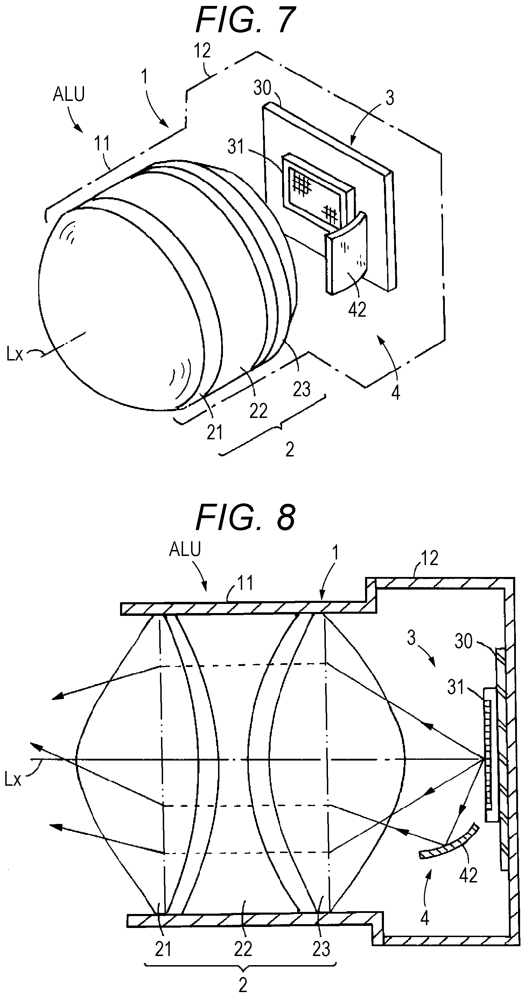

Fig. 7 is a schematic perspective view of an ADB unit ALU of a right headlamp R-HL in a second embodiment, and Fig. 8 is a plan sectional view thereof. Elements equivalent to those in the figures of the first embodiment are denoted by the same reference numerals. The second embodiment includes, as the auxiliary optical system 4, a side reflecting mirror 42 which is disposed on the left side (inside in a vehicle width direction) of the multi-divided LED array 3 and is fixed and supported in the light source box 12 with a reflecting surface facing the right side (outside in the vehicle width direction).

As in the downward reflecting mirror 41 of the first embodiment, the side reflecting mirror 42 is disposed at a position outside the directional angle of the multi-divided LED array 3, and does not hinder light within the directional angle, which has been emitted from the multi-divided LED array 3, from entering the projection lens 2. On the other hand, the side reflecting mirror 42 is disposed at a position at which light emitted leftward from the multi-divided LED array 3 at an angle greater than the directional angle enters, and reflects the incident light in a somewhat convergent state in the horizontal direction and causes the light to enter the projection lens 2. At this time, the side reflecting mirror 42 is configured to cause the reflected light to enter a region inside in the vehicle width direction with respect to the optical axis Lx of the projection lens 2 at a required incident angle.

Note that although not shown, the left headlamp L-HL shown in Fig. 1 also includes a side reflecting mirror 42, but since the left headlamp L-HL is bilaterally symmetrical to the right headlamp R-HL, an arrangement position and an arrangement direction are different. That is, the side reflecting mirror 42 is disposed on the right side which is inside the multi-divided LED array 3 in the vehicle width direction. The side reflecting mirror 42 reflects light, which has been emitted rightward from the multi-divided LED array 3 at an angle greater than the directional angle, in a somewhat convergent state in the horizontal direction, and causes the light to enter the projection lens 2. At this time, the side reflecting mirror 42 is configured to cause the reflected light to enter a region inside in the vehicle width direction with respect to the optical axis Lx of the projection lens 2 at a required incident angle.

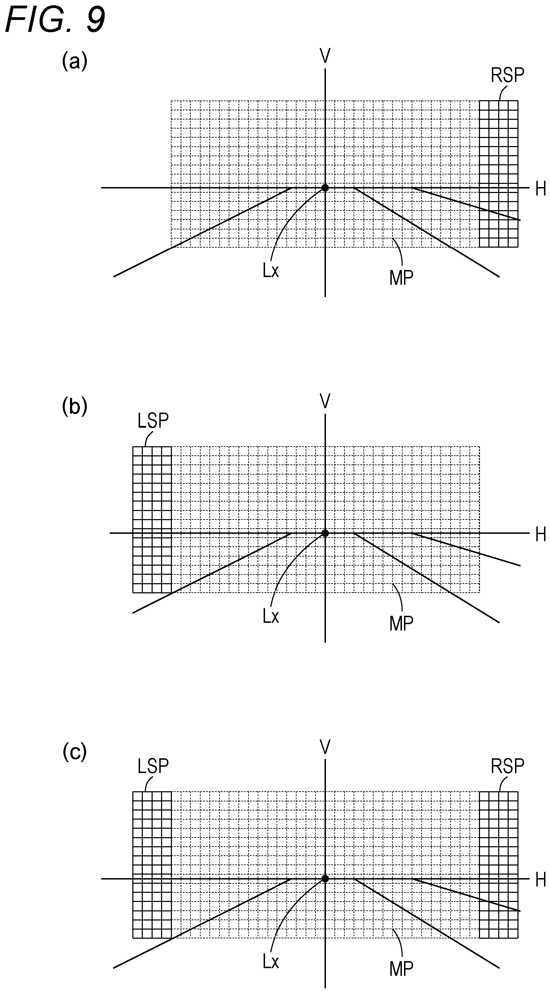

According to the second embodiment, as shown in Fig. 9(a), the main light distribution pattern MP is formed by the ADB unit ALU of the right headlamp R-HL, and a right auxiliary light distribution pattern RSP is formed on the right side of the main light distribution pattern by the side reflecting mirror 42. That is, in the ADB unit ALU, light having the directional angle deviated inward in the vehicle width direction out of light emitted from the multi-divided LED array 3 enters the side reflecting mirror 42, is reflected thereon, and enters the projection lens 2. Then, the light is emitted outward in the vehicle width direction with respect to the lens optical axis Lx from the projection lens 2, and this light forms the right auxiliary light distribution pattern RSP in an external region on the right side of the main light distribution pattern MP.

As shown in Fig. 9(b), a main light distribution pattern is formed by the ADB unit ALU of the left headlamp L-HL, and a left auxiliary light distribution pattern LSP is formed on the left side of the main light distribution pattern MP by the side reflecting mirror 42. That is, although the right and left are opposite to the ADB unit ALU of the right headlamp R-HL, light having the directional angle deviated inward in the vehicle width direction out of light emitted from the multi-divided LED array 3 enters the side reflecting mirror 42, is reflected thereon, and enters the projection lens 2. Further, the light is emitted outward in the vehicle width direction with respect to the lens optical axis Lx from the projection lens 2, and forms the left auxiliary light distribution pattern LSP in an external region on the left side of the main light distribution pattern MP.

Since both the right and left headlamps R-HL, L-HL are simultaneously turned on, the main light distribution patterns MP of the ADB units ALU and the right and left auxiliary light distribution patterns RSP, LSP are combined to form a light distribution pattern in which the auxiliary light distribution patterns are formed on both sides of the main light distribution pattern as shown in Fig. 9(c).

As described above, in the second embodiment, the illumination region is limited by setting the main light distribution pattern MP to have a required brightness, but since the auxiliary light distribution patterns RSP, LSP on the right and left sides of the main light distribution pattern MP are combined, the light distribution pattern illumination region is expanded as a whole. That is, it is possible not only to enhance the brightness of the illumination in the main light distribution pattern MP, but also to expand the illumination region by combining the main light distribution pattern MP and the auxiliary light distribution patterns RSP, LSP.

In the second embodiment, illumination of the right and left auxiliary light distribution patterns RSP, LSP is continued even when the ADB light distribution control is performed. Accordingly, it is possible to illuminate a region where no target is present, for example, a side region or a shoulder region on a road, with the right and left auxiliary light distribution patterns RSP, LSP. For example, when the automobile changes its traveling direction to the right and left, it is possible to illuminate a traveling destination region.

In the second embodiment, the main light distribution pattern MP formed by the main optical system 2 is limited to a region having a required size, so that the main light distribution pattern MP can be controlled to have a desired brightness. On the other hand, the right auxiliary light distribution pattern RSP and the left auxiliary light distribution pattern LSP are formed adjacent to the right and left sides of the main light distribution pattern MP by light from the light source 3, which does not contribute to formation of the main light distribution pattern MP, so that a region wider than a required region can be illuminated.

### (Third Embodiment)

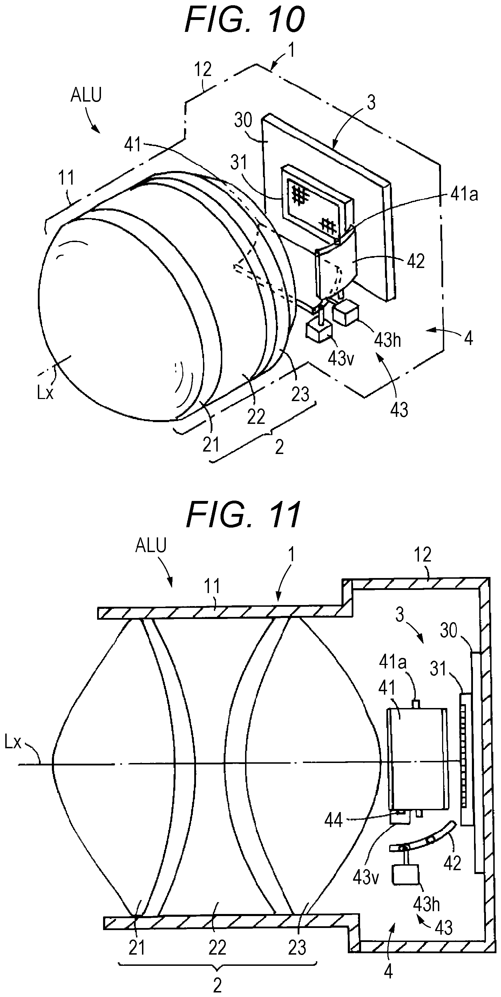

Fig. 10 is a schematic perspective view of an ADB unit ALU of a right headlamp R-HL in a third embodiment, and Fig. 11 is a horizontal sectional view thereof. Elements equivalent to those in the second embodiment are denoted by the same reference numerals. In the third embodiment, the auxiliary optical system includes both the downward reflecting mirror of the first embodiment and the side reflecting mirror of the second embodiment, and further includes a tilting mechanism 43 for tilting each reflecting mirror. The tilting mechanism 43 includes, for example, an electromagnetic actuator, and is configured to drive a coupling lever 44 to tilt each of the reflecting mirrors 41, 42 when energized. Energization of the tilting mechanism 43v for tilting the downward reflecting mirror 41 and the tilting mechanism 43h for tilting the side reflecting mirror 42 is controlled by the lamp ECU 201 shown in Fig. 4.

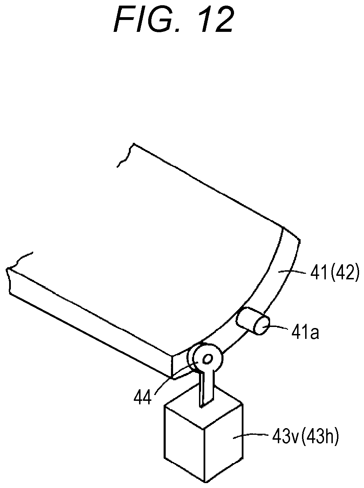

For example, as shown in Fig. 12, the downward reflecting mirror 41 is pivotally supported by the light source box 12 through rotary shafts 41a provided at both right and left ends, and the reflecting surface thereof is turnable in the vertical direction. The tilting mechanism 43v is supported by the light source box 12, and a tip end portion of the coupling lever 44 is coupled to part of the downward reflecting mirror 41. When the tilting mechanism 43v is energized, the coupling lever 44 is driven, and by drive of the coupling lever 44, the downward reflecting mirror 41 is tilted about the rotary shafts 41a such that the angle of the reflecting surface in the vertical direction is changed.

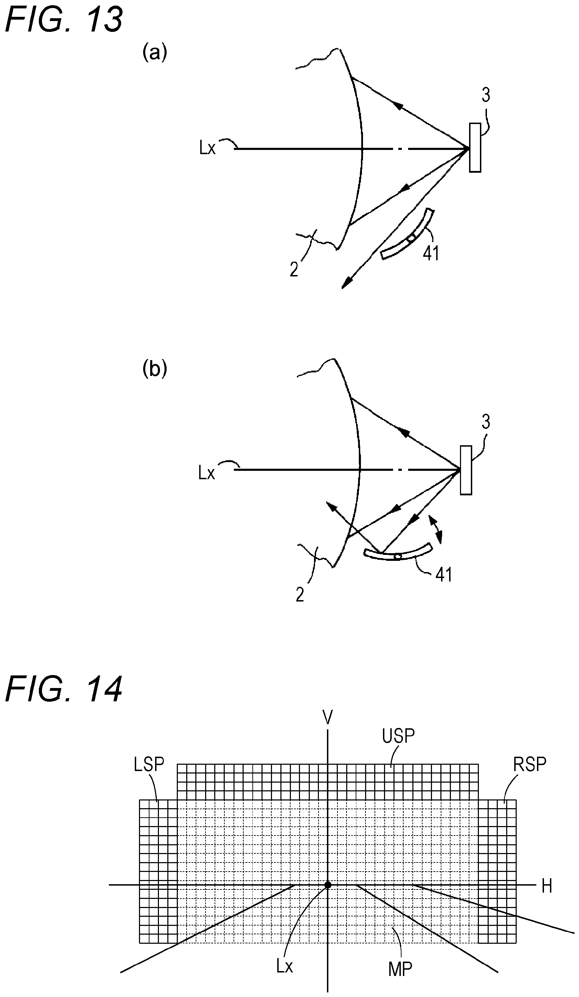

When the tilting mechanism 43v is not energized, the downward reflecting mirror 41 is tilted to a tilting position outside the directional angle of the multi-divided LED array 3, and not much light emitted from the multi-divided LED array 3 enters the reflecting surface, as shown in Fig. 13(a). On the other hand, when the tilting mechanism 43v is energized, the downward reflecting mirror 41 is tilted to a tilting position at which light emitted from the multi-divided LED array 3 at an angle outside the directional angle enters the reflecting surface, as shown in Fig. 13(b). That is, the downward reflecting mirror 41 is at the same position as that of the first embodiment.

Although not shown in detail, the side reflecting mirror 42 also has a similar configuration, and is pivotally supported by the light source box 12 through rotary shafts provided at both upper and lower ends of the side reflecting mirror 42, and the reflecting surface thereof is turnable in the horizontal direction. A tip end portion of the coupling lever 44 of the tilting mechanism 43h is coupled to part of the side reflecting mirror 42. When the tilting mechanism 43h is not energized, the side reflecting mirror 42 is tilted to a tilting position outside the directional angle of the multi-divided LED array 3, and not much light emitted from the multi-divided LED array 3 enters the reflecting surface. When the tilting mechanism 43h is energized, the side reflecting mirror 42 is at a tilting position at which light emitted from the multi-divided LED array 3 at an angle outside the directional angle enters the reflecting surface. That is, the side reflecting mirror 42 is at the same position as that of the second embodiment.

Although not shown, in the ADB unit ALU of the left headlamp L-HL, a side reflecting mirror is disposed on the right side as in the second embodiment, and can be tilted by a tilting mechanism.

According to the third embodiment, when a driver sets the control switch 203 to the fixed mode, the tilting mechanisms 43v, 43h of the downward reflecting mirror 41 and the side reflecting mirror 42 are energized, and the reflecting mirrors 41, 42 are brought into a state of receiving light from the multi-divided LED array 3, and the auxiliary light distribution patterns similar to those of the first embodiment and the second embodiment are formed. That is, as shown in a schematic view of Fig. 14, the auxiliary light distribution patterns are formed on the right and left sides and upper side of the main light distribution pattern, and these are combined to form a light distribution pattern.

When the driver sets the control switch 203 to the manual mode, energization to the tilting mechanism 43 can be controlled by another switch operation by the driver. Thus, when the driver thinks necessary, the tilting mechanism 43 is driven to tilt at least one of the downward reflecting mirror 41, the side reflecting mirror 42 of the main lamp unit on the right side, or the reflecting mirror 42 of the ADB unit ALU on the left side such that light from the multi-divided LED array 3 enters the reflecting surface. Accordingly, the upper auxiliary light distribution pattern USP, the left auxiliary pattern LSP, and the right auxiliary pattern RSP shown in Fig. 14 can be arbitrarily formed. For example, at the time of traveling rightward, the side reflecting mirror 42 of the ADB unit ALU on the right side is tilted by the tilting mechanism 43h such that light from the multi-divided LED array 3 enters the reflecting surface. Accordingly, the right auxiliary light distribution pattern RSP is formed on the right side of the main light distribution pattern MP, and the illumination region of the traveling destination can be expanded.

When the driver sets the control switch 203 to the automatic mode, the lamp ECU 201 controls energization to the tilting mechanism 43 based on the ADB control signal from the vehicle ECU 202. Thus, the tilting mechanism 43 is driven according to the situation of an object present in front of the automobile, such as other vehicles, to tilt at least one of the downward reflecting mirror 41 or the right or left side reflecting mirror 42 such that light from the multi-divided LED array 3 enters the reflecting surface. Accordingly, the upper auxiliary light distribution pattern USP, the left auxiliary pattern LSP, and the right auxiliary pattern RSP shown in Fig. 14 can be automatically formed. For example, when no oncoming vehicle is present, the right or left side reflecting mirror 42 of the right or left ADB unit ALU is tilted by the tilting mechanism 43h such that light from the multi-divided LED array 3 enters the reflecting surface. Accordingly, the auxiliary light distribution patterns RSP, LSP are formed on the right and left sides of the main light distribution pattern MP, and the illumination region is expanded. When an oncoming vehicle is present, the ADB light distribution control is performed, and energization to the tilting mechanism 43h of the side reflecting mirror 42 of each of the right and left ADB units ALU is stopped so as not to form the right and left auxiliary light distribution patterns.

The downward reflecting mirror 41, the right and left side reflecting mirrors 42, and the tilting mechanism 43 described in the embodiment may be appropriately changed to those having other configurations. Further, the arrangement position and shape of each reflecting mirror may be set according to the light intensity characteristics of the multi-divided LED array 3. For example, the downward reflecting mirror and the side reflecting mirror may be flat mirrors or convex mirrors according to the form of an auxiliary light distribution pattern to be formed.

Here, in the first embodiment, the downward reflecting mirror 41 may be tilted by a tilting mechanism. In the second embodiment, the side reflecting mirror 42 may be tilted by a tilting mechanism. In the third embodiment, only one of the downward reflecting mirror 41 or the side reflecting mirror 42 may include the tilting mechanism, or both the downward reflecting mirror 41 and the side reflecting mirror 42 may be reflecting mirrors having a fixed structure.

In the third embodiment of the present invention, the downward reflecting mirror 41 and the side reflecting mirror 42 only need to change their positions to positions at which light from the multi-divided LED array is not reflected, and therefore, are not necessarily tilted by the tilting mechanisms. For example, these mirrors may be moved by drive mechanisms that linearly move the mirrors.

The present international application claims priority based on Japanese Patent Application No. 2022-034093 filed on March 7, 2022, and the entire contents of Japanese Patent Application No. 2022-034093 are incorporated herein by reference.

The description of the specific embodiments of the present invention is presented for the purpose of illustration. The specific embodiments are not intended to be exhaustive or to limit the invention as it is in the form described. It is obvious to those skilled in the art that many modifications and alterations are possible in light of the contents of the description above.

### LIST OF REFERENCE SIGNS

1 Unit Case
2 Main Optical System
3 Light Source (Multi-Divided LED Array)
4 Auxiliary Optical System
21, 22, 23 Lens
41 Downward Reflecting Mirror
42 Side Reflecting Mirror
43 (43v, 43h) Tilting Mechanism (Drive Mechanism)
100 Lamp Housing
201 Lamp ECU
202 Vehicle ECU
ALU ADB Lamp Unit
MP Main Light Distribution Pattern
USP Upper Auxiliary Light Distribution Pattern
RSP Right Auxiliary Light Distribution Pattern
LSP Left Auxiliary Light Distribution Pattern
Lx Lens Optical Axis

## Claims

1. A vehicle lamp comprising:
a light source configured such that a large number of light emitting elements are arranged, the light source selecting a light emitting element to emit light of a desired pattern;
a main optical system that projects the light emitted from the light source to form a main light distribution pattern; and
an auxiliary optical system that causes light which has been emitted from the light source and does not directly enter the main optical system to enter the main optical system,
wherein the light incident from the auxiliary optical system forms an auxiliary light distribution pattern in an external region adjacent to the main light distribution pattern.

2. The vehicle lamp according to claim 1, wherein the auxiliary optical system is a reflecting mirror that reflects the light which has been emitted from the light source and does not directly enter the main optical system and causes the light to enter the main optical system.

3. The vehicle lamp according to claim 2, wherein the reflecting mirror is disposed below a lens optical axis of the main optical system, and when the reflected light enters the main optical system, an upper auxiliary light distribution pattern is formed in an external region above the main light distribution pattern.

4. The vehicle lamp according to claim 2, wherein the reflecting mirror is disposed at a side of a lens optical axis of the main optical system, and when the reflected light enters the main optical system, a right auxiliary light distribution pattern or a left auxiliary light distribution pattern is formed in an external region on a right or left side of the main light distribution pattern.

5. The vehicle lamp according to any of claims 2 to 4, further comprising: a drive mechanism that moves the reflecting mirror, wherein the drive mechanism moves the reflecting mirror to a position at which the light from the light source enters the main optical system or a position at which the light from the light source does not enter the main optical system.

6. The vehicle lamp according to any of claims 1 to 4, wherein the light source is a multi-divided LED array in which a large number of micro LEDs are arranged.

7. The vehicle lamp according to claim 6, further comprising: a controller that selectively controls light emission from the large number of micro LEDs according to a vehicle surrounding situation.

8. The vehicle lamp according to claim 7, wherein the controller controls the movement mechanism.

9. The vehicle lamp according to any of claims 1 to 4, wherein the vehicle lamp is applied to a headlamp of an automobile.
